**Europäisches Patentamt**

(19) **European Patent Office**

**Office européen des brevets**

(11) Numéro de publication : **0 095 961**
**B1**

(12) # FASCICULE DE BREVET EUROPÉEN

(45) Date de publication du fascicule du brevet :
**23.12.87**

(51) Int. Cl.⁴ : **F 16 C 32/00**

(21) Numéro de dépôt : **83400988.8**

(22) Date de dépôt : **17.05.83**

(54) **Procédé de réalisation de paliers hydrodynamiques.**

(30) Priorité : **27.05.82 FR 8209476**

(43) Date de publication de la demande :
**07.12.83 Bulletin 83/49**

(45) Mention de la délivrance du brevet :
**23.12.87 Bulletin 87/52**

(84) Etats contractants désignés :
**CH DE GB IT LI**

(56) Documents cités :
**FR-A- 2 042 865**
**FR-A- 2 330 279**
**FR-A- 2 346 595**
**US-A- 3 382 014**
**US-A- 4 229 054**

(73) Titulaire : **ABG SEMCA**
**3, Villa Thoréton**
**F-75015 Paris (FR)**

(72) Inventeur : **Soum, Jacques**
**THOMSON-CSF SCPI 173, bld Haussmann**
**F-75379 Paris Cedex 08 (FR)**
Inventeur : **Malabre, Christian**
**THOMSON-CSF SCPI 173, bld Haussmann**
**F-75379 Paris Cedex 08 (FR)**

(74) Mandataire : **Grynwald, Albert et al**
**THOMSON-CSF SCPI 19, avenue de Messine**
**F-75008 Paris (FR)**

## Description

L'invention concerne un procédé de réalisation de paliers hydrodynamiques destinés à supporter et guider des arbres de machines tournantes, notamment arbres appelés à tourner à grandes vitesses de rotation ; l'invention vise plus particulièrement la réalisation de paliers à feuilles minces conditionnant la formation d'un film fluide de sustentation de l'arbre lorsque ce dernier est mis en rotation.

Par « paliers hydrodynamiques » on entend aussi bien les paliers dans lesquels la sustentation est obtenue par un film gazeux que ceux où elle est obtenue par un film liquide.

On sait que, dans les machines tournantes à grandes vitesses de rotation, on utilise avantageusement des paliers à film fluide de sustentation, qui évitent tout contact entre surfaces solides. On connaît actuellement deux types essentiels de paliers de ce genre : les paliers hydrostatiques qui présentent le défaut d'exiger une source de pression et les paliers hydrodynamiques dans lesquels le film fluide de sustentation est produit par la rotation de l'arbre et qui présentent donc l'avantage d'être autonomes. Dans ce dernier type de paliers, les paliers à feuilles sont les plus connus et sont utilisés dans la majorité des cas ; ils comprennent une pluralité de feuilles minces cintrées qui sont fixées à l'intérieur de l'alésage d'un corps de palier, de façon à recouvrir partiellement et à constituer une surface interne flottante formant une succession de « coins de sustentation » qui engendrent la création du film fluide entre les feuilles et l'arbre lorsque ce dernier atteint une vitesse de rotation suffisante. On pourra par exemple se reporter au brevet français N° 1 454 024 déposé le 18/08/1965 pour plus de détails sur ces paliers hydrodynamiques à feuilles.

Dans les paliers connus de ce type, les feuilles cintrées sont généralement en tôle mince et sont individuellement fixées à l'intérieur du corps de palier grâce à des structures creuses telles que des rainures, saignées, ou trous calibrés, qui sont usinées dans le corps de façon à déboucher sur la surface interne de celui-ci ; chaque feuille est dotée d'une extrémité préformée présentant une forme adaptée pour se loger dans la structure creuse qui lui correspond et chacune desdites feuilles est individuellement fixée dans ladite structure creuse du corps de palier grâce à des organes de fixation tels que clavettes, axes, vis,...

Ce procédé de réalisation présente de graves défauts. En premier lieu l'usinage des corps de palier et dans une moindre mesure, la fabrication des organes de fixation de chaque feuille, sont des opérations relativement coûteuses qui augmentent très notablement le prix de revient des paliers obtenus. De plus, ce type de réalisation exige l'utilisation de corps de palier d'épaisseur importante pour permettre d'y usiner les structures creuses précitées et d'y loger les organes de fixation de chaque feuille.

En outre, le montage individuel des feuilles dans le corps de palier est une opération extrêmement délicate en raison de la très grande précision géométrique exigée ; une telle opération pratiquée, soit à l'occasion d'opération de maintenance de la machine tournante concernée, soit lors du montage de celle-ci, exige un personnel qualifié qui doit être envoyé sur les lieux avec un outillage spécialisé et qui rencontre souvent des conditions de travail peu favorables, rendant ces opérations de réglage des feuilles d'exécution longue et difficile. Cet inconvénient est particulièrement grave dans le cas d'opérations de maintenance qui deviennent longues et onéreuses lorsque, au terme de leur durée normale de fonctionnement, un certain nombre de paliers sont à équiper de nouvelles feuilles minces.

Au surplus, les manipulations individuelles de chaque feuille mince, avant le montage provoquent souvent des déformations de celles-ci ou des altérations de leur état de surface, qui peuvent être préjudiciables à la formation correcte du film fluide de sustentation et donc au bon fonctionnement du palier.

La présente invention se propose d'apporter une solution palliant les défauts sus-évoqués des paliers hydrodynamiques à feuilles.

Dans le document US-A-3 382 014, on décrit une structure de palier qui réalise en fait une cartouche. Des feuilles minces sont disposées en forme sur un corps de palier non usiné. L'invention propose un perfectionnement de cette technique.

Un objectif de l'invention est d'indiquer un nouveau procédé de réalisation de palier hydrodynamique à feuilles qui, en particulier, supprime les opérations d'usinage du corps de palier en vue de réduire notablement le coût de celui-ci.

Un autre objectif est de simplifier considérablement les opérations de montage et de réglage des feuilles dans le corps de palier afin de faciliter les opérations de maintenance et d'en permettre l'exécution par un personnel non qualifié sans outillage spécialisé.

Un autre objectif est d'écarter tout risque d'altération ou de déformation des feuilles en cours de transports ou de manipulation.

Un autre objectif est d'indiquer un procédé compatible avec l'utilisation de corps de palier d'épaisseur réduite par rapport à ceux utilisés dans la technique antérieure, de façon à permettre de réaliser un gain de poids et d'encombrement pour chaque palier, ce qui représente un avantage très sensible dans certains secteurs techniques et notamment dans le secteur aéronautique, automobile et cryogénie.

L'invention vise la réalisation d'un palier du type comprenant dans l'alésage d'un corps de palier, plusieurs feuilles minces cintrées se recouvrant partiellement de façon à former une surface interne flottante adaptée pour se disposer autour de l'arbre et conditionner, lors de la rotation de celui-ci, la formation d'un film fluide entre ledit arbre et ladite surface. Le procédé de réalisation d'un tel palier consiste :

à fabriquer une cartouche autonome destinée à constituer l'ensemble fonctionnel interne du palier, ladite cartouche étant composée de feuilles minces telles que précitées, fixées les unes par rapport aux autres avec des parties de recouvrement, de façon à réaliser un ensemble autonome possédant, d'une part une surface flottante interne du type précité, d'autre part une surface externe périphérique de diamètre correspondant à celui de l'alésage du corps de palier,

à insérer ladite cartouche dans l'alésage du corps de palier, puis à l'immobiliser en rotation et en translation axiale par rapport à celui-ci. Le procédé se caractérise en ce que

chaque feuille (2) est réalisée de façon à comporter un talon d'extrémité (2a) de profil circulaire de rayon égal ou légèrement inférieur au rayon d'alésage du corps de palier (5), un léger décrochement (2b) suivi d'une portion interne de fixation (2c) de profil circulaire de rayon inférieur au précédent et une partie fonctionnelle (2d) prolongeant la portion interne et présentant le même profil,

les feuilles (2) sont maintenues par l'outillage de positionnement (11, 12, 13) de sorte que leur talon d'extrémité (2a) se courbe suivant le rayon d'alésage du corps de palier (5) et que leur portion interne de fixation (2c) vienne en appui contre le talon d'extrémité de la feuille du dessus,

lesdites feuilles (2) sont fixées les unes aux autres dans l'outillage, chaque feuille étant fixée, d'une part, par son talon d'extrémité (2a) sur la feuille du dessous, d'autre part, par sa portion interne de fixation (2c) sur la feuille du dessus.

En outre, après son insertion dans le corps du palier, la cartouche est de préférence immobilisée par rapport à celui-ci, en mettant en place en bordure du corps, des moyens de butée solidarisés audit corps et venant en appui axial et tangentiel avec des moyens conjugés prévus en bordure de la cartouche.

Ainsi la présente invention conduit à réaliser en atelier spécialisé des cartouches autonomes dans lesquelles les feuilles sont prépositionnées les unes par rapport aux autres, de façon que leur partie interne forme une surface flottante appropriée et que la surface externe de ladite cartouche une fois fabriquée garde à l'état libre sa forme et ses réglages et peut être manipulé par sa surface externe sans risque de déformation ou d'altération de la surface flottante interne qui se trouve protégée. La mise en place dans le corps du palier est une opération extrêmement simple qui consiste à glisser axialement la cartouche dans l'alésage du corps et à l'immobiliser notamment par des moyens de butée, ces opérations n'exigeant aucune précaution ou réglage délicat. Les cartouches peuvent être enlevées et changées tout aussi facilement à l'occasion d'opérations de maintenance qui n'exigent plus de qualification ou d'outillage spécial.

De plus, l'alésage du corps de palier peut être lisse et le procédé de l'invention supprime les opérations traditionnelles d'usinage de ce corps, qui grèvent le prix du palier obtenu. Il est à remarquer que l'épaisseur du corps peut être étudiée pour résister strictement aux contraintes mécaniques qui lui sont appliquées sans exigence d'une épaisseur minimale permettant la fixation individuelle des feuilles à l'intérieur de celui-ci comme c'est le cas dans la technique connue.

L'invention permet de réaliser des cartouches autonomes précitées qui sont destinées à constituer des ensembles fonctionnels interchangeables de paliers hydrodynamiques, ces cartouches étant composées de plusieurs feuilles, fixées avec des parties de recouvrement, soit les unes sur les autres soit à l'intérieur d'une mince chemise.

Enfin, l'invention permet de réaliser des paliers hydrodynamiques obtenus par mise en oeuvre du procédé défini plus haut, lesdits paliers comprenant chacun un corps de palier, pourvu d'un alésage de diamètre légèrement supérieur à celui de l'arbre qu'il est appelé à supporter et dans lequel est disposée une cartouche autonome du type précité qui est maintenue en translation axiale et en rotation à l'intérieur dudit alésage.

L'invention ayant été exposée dans sa forme générale, d'autres caractéristiques se dégageront de la description qui suit en regard des dessins annexés, lesquels présentent à titre d'exemples non limitatifs des modes de réalisation de l'invention ; sur ces dessins qui font partie intégrante de la présente description :

la figure 1 est une coupe transversale d'une cartouche autonome conforme à l'invention,

les figures 2 et 3 sont des vues schématiques à échelle dilatée, d'une des feuilles minces composant ladite cartouche, représentée respectivement en perspective et en coupe transversale,

la figure 4 illustre la réalisation d'un palier hydrodynamique à partir d'une cartouche telle que représentée à la figure 1,

la figure 5 représente en coupe longitudinale axiale le palier hydrodynamique réalisé,

les figures 6a, 6b, 6c schématisent, à titre d'exemple illustratif, des phases de fabrication de la cartouche représentée à la figure 1.

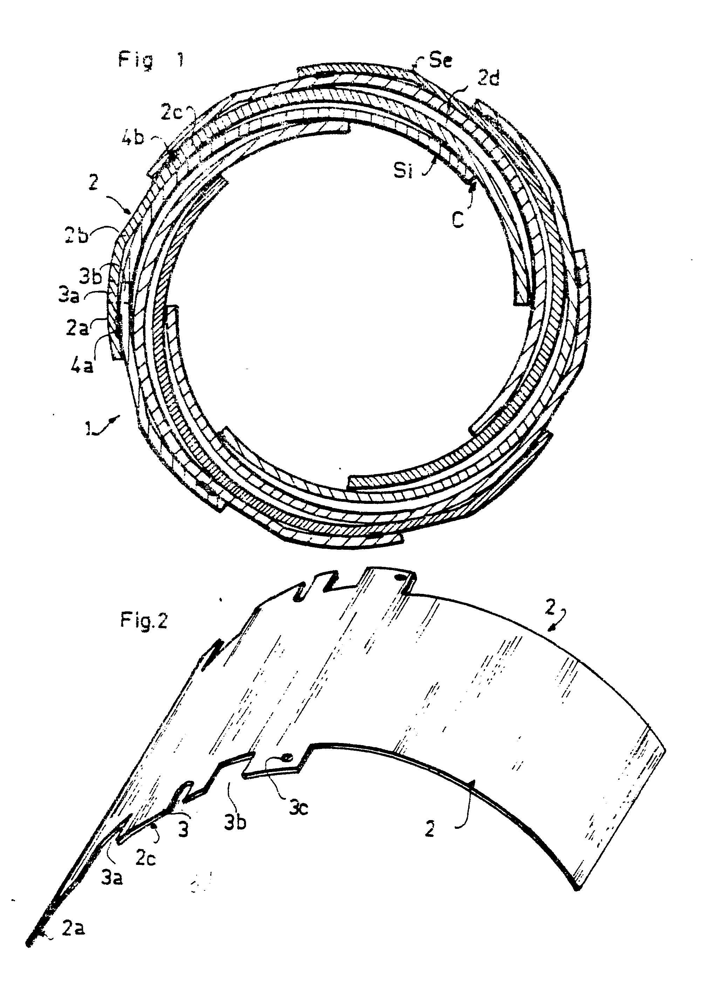

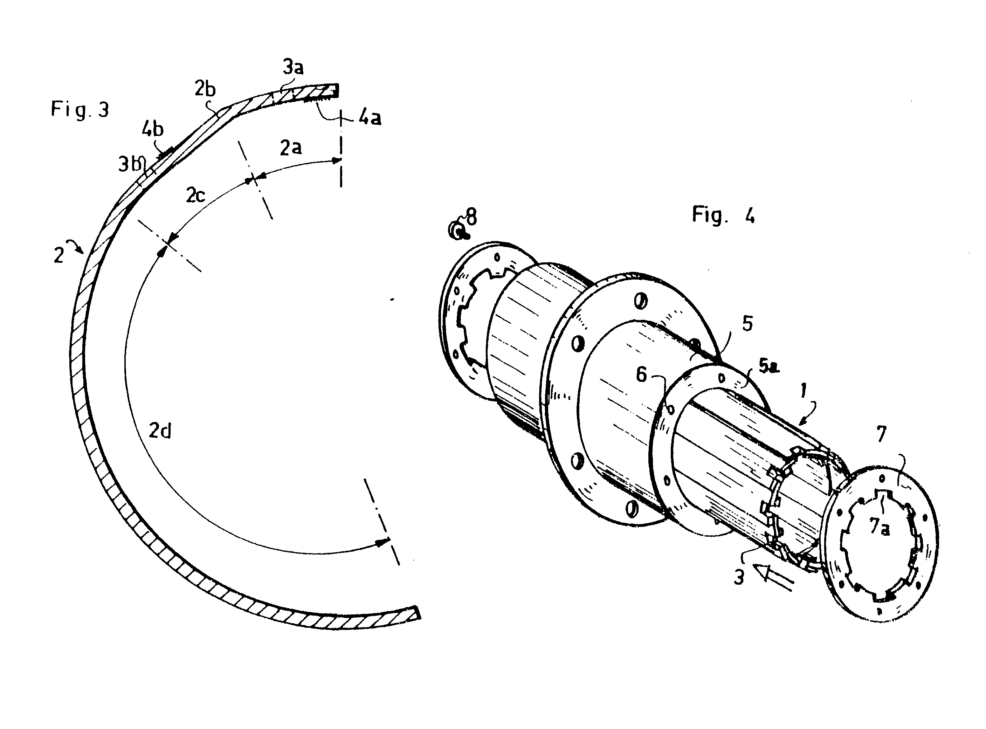

La cartouche autonome 1 représentée à titre d'exemple à la figure 1 est fabriquée en atelier spécialisé au moyen de plusieurs feuilles minces cintrées (en l'exemple au nombre de huit) du type de celle schématisée en 2 aux figures 2 et 3.

Chaque feuille 2 réalisée en tôle mince comprend sur sa longueur, un talon d'extrémité 2a, un léger décrochement 2b suivi d'une portion 2c, dite portion interne de fixation, et une partie fonctionnelle 2d qui prolonge la portion interne de fixation 2c.

Chaque feuille est découpée de façon que son talon d'extrémité 2a et sa portion interne de fixation 2c soient légèrement plus larges que sa partie fonctionnelle 2d, ces talon et portion interne possédant ainsi des marges latérales 3.

Ces marges sont pourvues de crantages tels que 3a et 3b, destinés à permettre d'immobiliser la cartouche 1 dans le corps de palier. En l'exemple deux crans ont été pratiqués sur chaque marge 3, en positions adaptées pour que le cran 3a d'une feuille se superpose avec le cran 3b de la feuille du dessous.

De plus, les marges 3 de chaque feuille comprennent des trous de positionnement, tels que 3c, qui comme on le verra plus loin, servent à positionner les feuilles les unes par rapport aux autres lors de la fabrication de la cartouche 1. (En l'exemple, des échancrures 3d sont également pratiquées sur les marges 3 en positions adaptées pour que l'échancrure 3d d'une feuille se superpose avec le trou 3c de la feuille du dessous et permette ainsi l'accès à ce trou).

Les diverses feuilles 2 de la cartouche sont soudées les unes sur les autres par des points de soudure tels que schématisés en 4a et 4b à la figure 1 ; chaque feuille 2 est ainsi fixée, d'une part, en 4a par son talon d'extrémité 2a sur la feuille du dessous, d'autre part, en 4b par sa portion interne de fixation 2c sur la feuille du dessus. En l'exemple les points de soudure sont pratiqués au niveau des marges 3 des feuilles.

La cartouche ci-dessus décrite forme un ensemble autonome dans lequel les feuilles ont une position précise les unes par rapport aux autres : lorsque lesdites feuilles sont ainsi positionnées, leur talon externe 2a forme une surface externe périphérique Se (en l'exemple discontinue) dont le diamètre est égal au diamètre de l'alésage du corps de palier, cependant que leur partie fonctionnelle 2d (de diamètre inférieur) forme une surface interne flottante Si, de diamètre correspondant à celui de l'arbre et de forme adaptée pour provoquer l'effet hydrodynamique recherché (création de « coins de sustentation » dans les zones C situées à la limite de deux feuilles).

Il est à remarquer que la partie fonctionnelle des feuilles, qui forme la surface interne flottante Si est protégée à l'intérieur de la cartouche, cette dernière pouvant être manipulée par sa périphérie sans aucun contact avec la surface interne Si ce qui supprime tous les risques d'altération ou de déformation de celle-ci.

La réalisation d'un palier à partir d'une telle cartouche est une opération extrêmement simple, schématisée à la figure 4. Le corps de palier utilisé 5 présente un alésage interne lisse et est simplement doté sur ses deux chants 5a, de trous borgnes taraudés tels que 6.

La cartouche appelée à équiper le corps 5 a été réalisée sur le plan dimensionnel de façon que la largeur de ses parties fonctionnelles 2d soit égale à celle du corps et que le diamètre de sa surface externe Se soit égal à celui de l'alésage dudit corps (ajustement glissant). Ladite cartouche est insérée dans cet alésage par une poussée axiale, jusqu'à venir se disposer à l'intérieur du corps avec ses seules marges crantées 3 dépassant de chaque côté de celui-ci.

On immobilise ensuite la cartouche au moyen de deux rondelles en forme de couronne telles que 7, qui possèdent un crantage interne 7a adapté au crantage de la cartouche, ces deux crantages étant imbriqués l'un dans l'autre. Des vis telles que 8 permettent d'assujettir les rondelles 7 sur les chants du corps de palier 5.

Ces opérations ne demandent aucun outillage spécial et peuvent être exécutées sans précaution particulière par un personnel non qualifié.

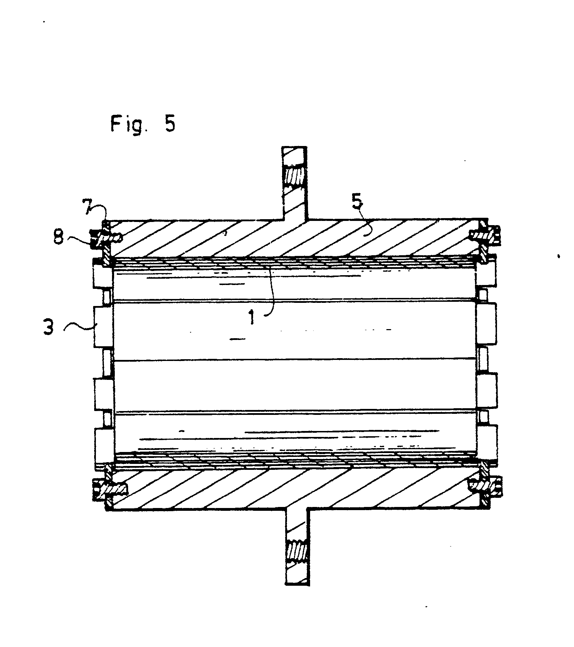

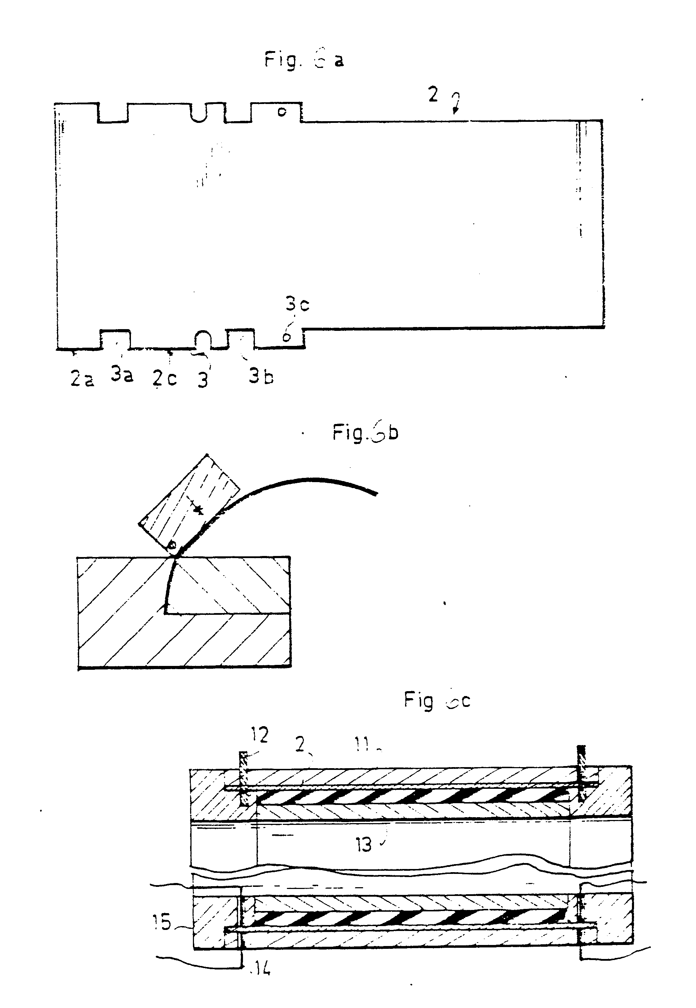

Le palier ainsi réalisé est schématisé en coupe à la figure 5. Le changement d'une cartouche par une autre constitue une opération de maintenance qui devient extrêmement simple et ne comporte aucun risque de réglage déficient des feuilles, dès l'instant où la cartouche a été préalablement correctement fabriquée en atelier spécialisé. Il est à noter que le corps de palier 5 n'exige aucun usinage spécial.

La fabrication des cartouches autonomes conformes à l'invention peut être réalisée par divers processus, les feuilles pouvant le cas échéant être fixées entre elles par d'autres moyens que des points de soudure tels que précités (brasage, soudure sur la tranche, soudure continue ou discontinue, soudure utilisant un bombardement électronique, soudure au laser, plasma, soudure par friction, induction, diffusion...).

Il est également possible d'assembler les feuilles par une liaison autre qu'une liaison par soudure (rivetage, agrafage, collage, sertissage, roulage...).

A titre purement illustratif, les figures 6a, 6b, et 6c schématisent trois phases de fabrication d'une cartouche telle que représentée à la figure 1.

Après traitement thermique des tôles leur conférant une dureté appropriée, celles-ci sont découpées suivant le développé adapté (figure 1). Cette découpe peut être réalisée par tout procédé connu : découpe chimique, usinage, découpe au laser, oxycétylénique, découpe par bombardement électronique etc...

On réalise ensuite une mise en forme des feuilles en cintrant individuellement chacune de celles-ci de façon que leur talon d'extrémité présente un profil circulaire de rayon égal ou légèrement inférieur au rayon de l'alésage du corps de palier, et que, après un léger décrochement, leur portion interne de fixation et leur partie fonctionnelle présentent un profil circulaire de rayon inférieur au précédent, adapté à l'obtention de l'effet hydrodynamique.

Cette opération de mise en forme peut être exécutée en un seule fois par emboutissage, électroformage, magnétoformage, hydroformage. Elle peut également être réalisée en deux étapes, l'une de mise en forme à la rouleuse, l'autre (illustrée à la figure 6b) de pliage pour obtenir le décrochement. Ce pliage s'effectue dans un outillage qui maintient la partie flottante de la feuille et comporte une partie mobile de pliage.

Les feuilles ainsi mises en forme sont ensuite montées dans un outillage qui permet de les positionner les unes par rapport aux autres et de les souder dans cette position. Cet outillage schématisé en coupe à la figure 6c comprend un manchon creux 11 de diamètre intérieur égal à celui de l'alésage du corps de palier. Les feuilles 2 sont positionnées dans ce manchon, angulaire- ment et axialement, grâce à des pions amovibles 12 qui sont introduits dans des trous du manchon de façon à pénétrer dans les trous de positionnement 3c des feuilles. Un mandrin expansible 13 (comprenant en l'exemple une forme interne de plaquage et une épaisseur d'un matériau souple) est ensuite introduit à l'intérieur du manchon 11 de façon à plaquer les feuilles 2 contre l'alésage interne de ce dernier et à conférer aux feuilles les formes et positions qu'elles sont appelées à avoir dans la cartouche.

La soudure des feuilles dans cette position est effectuée au moyen d'électrodes telles que 14, qui passent dans des trous pratiqués dans le manchon 11 et dans des guides internes 15 disposés en bordure.

Après réalisation des points de soudure, les pions 12, le mandrin 13 et les guides 15 sont démontés et la cartouche est enlevée du manchon par une poussée axiale.

Bien entendu les opérations ci-dessus ne sont données qu'à titre d'exemple pour illustrer un mode de fabrication des cartouches parmi d'autres, l'invention n'étant pas limitée aux termes de la description précédente mais en comprenant au contraire toutes les variantes. Il est à noter que les moyens d'immobilisation de la cartouche dans le corps de palier peuvent revêtir d'autres formes de réalisation que celles décrites ; en particulier cette immobilisation peut dans certaines applications être obtenue par friction de la surface externe de la cartouche contre la surface interne du corps de palier.

L'invention est applicable dans toutes les machines tournantes notamment lorsque les vitesses de rotation sont élevées : turbo machine (compresseurs, turbines, ventilateurs), broche d'usinage grande vitesse, moteurs électriques grande vitesse, centrifugeuses etc.. Elle s'étend aussi bien aux paliers cylindriques qu'aux paliers coniques.

**Revendications**

1. Procédé de réalisation d'un palier hydrodynamique pour supporter et guider un arbre de machine tournante, ledit palier étant de type comprenant, dans l'alésage d'un corps de palier (5), plusieurs feuilles minces cintrées (2) se recouvrant partiellement de façon à former une surface interne flottante (Si) adaptée pour se disposer autour de l'arbre et conditionner, lors de la rotation de celui-ci, la formation d'un film fluide entre ledit arbre et ladite surface, ledit procédé consistant :

à fabriquer une cartouche autonome (1) destinée à constituer l'ensemble fonctionnel interne du palier, ladite cartouche (1) étant composée de feuilles minces (2) telles que précitées, en fixant les feuilles les unes sur les autres, chaque feuille étant fixée aux deux feuilles voisines par des zones décalées le long de ladite feuille avec des parties de recouvrement, de façon à réaliser un ensemble autonome possédant, d'une part, une surface flottante interne (Si) du type précité, d'autre part, une surface externe périphérique (Se) de diamètre correspondant à celui de l'alésage du corps de palier (5),

à insérer ladite cartouche (1) dans l'alésage du corps de palier (5), puis l'immobiliser en rotation et en translation axiale par rapport à celui-ci, ledit procédé étant caractérisé en ce que :

chaque feuille (2) est réalisée de façon à comporter un talon d'extrémité (2a) de profil circulaire de rayon égal ou légèrement inférieur au rayon d'alésage du corps de palier (5), un léger décrochement (2b) suivi d'une portion interne de fixation (2c) de profil circulaire de rayon inférieur au précédent et une partie fonctionnelle (2d) prolongeant la portion interne et présentant le même profil,

les feuilles (2) sont maintenues par l'outillage de positionnement (11, 12, 13) de sorte que leur talon d'extrémité (2a) se courbe suivant le rayon d'alésage du corps de palier (5) et que leur portion interne de fixation (2c) vienne en appui contre le talon d'extrémité de la feuille du dessus,

lesdites feuilles (2) sont fixées les unes aux autres dans l'outillage, chaque feuille étant fixée, d'une part, par son talon d'extrémité (2a) sur la feuille du dessous, d'autre part, par sa portion interne de fixation (2c) sur la feuille du dessus.

2. Procédé selon la revendication 1, caractérisé en ce que les feuilles (2) sont fixées par soudage ou brasage.

3. Procédé selon l'une des revendications 1 ou 2, caractérisé en ce que, après son insertion dans le corps de palier (5), la cartouche (1) est immobilisée par rapport à celui-ci, en mettant en place en bordure du corps, des moyens de butée (7) solidarisés audit corps et venant en appui axial et tangentiel avec des moyens conjugués (3a, 3b) prévus en bordure de la cartouche (1).

4. Procédé selon la revendication 3, caractérisé en ce que la cartouche (1) est réalisée de façon à posséder des crantages (3a, 3b) le long de ses deux bords, l'immobilisation de ladite cartouche étant assurée, après son insertion dans le corps de palier (5), en fixant sur chaque chant dudit corps une rondelle en forme de couronne (7) possédant un crantage interne (7a), imbriqué avec le crantage correspondant de la cartouche.

5. Procédé selon la revendication 2, caractérisé en ce que les feuilles (2) sont fixées les unes aux autres par des points de soudure réalisés au niveau de leur talon d'extrémité (2a) et de leur portion interne de fixation (2c).

6. Procédé selon la revendication 4, caractérisé en ce que chaque feuille (2) est découpée de façon que son talon d'extrémité (2a) et sa portion interne de fixation (2c) soient légèrement plus larges que sa partie fonctionnelle (2d), de façon à doter ces talon et portion interne de marges latérales (3), les crantages (3a, 3b) étant pratiqués dans lesdites marges latérales.

7. Procédé selon les revendications 2 et 4 prises ensemble, caractérisé en ce que les points de soudure (4a, 4b) sont réalisés au niveau des marges latérales (3) des talons (2a) et portion interne (2c) de chaque feuille.

## Claims

1. Method of providing a hydrodynamic bearing for supporting and guiding a shaft of a rotating engine, said bearing being of the type comprising, within the bore of a bearing body (5), a plurality of thin arched sheets (2) partially overlapping with each other in a manner to form an inner floating surface (Si) adapted to arrange itself about the shaft and to cause the build-up of a fluid film between said shaft and said surface upon rotation of the shaft, said method consisting :

in producing a self-contained cartridge (1) susceptible of forming the functional inner unit of the bearing, said cartridge (1) being composed of thin sheets (2) such as the above-mentioned ones, by affixing the sheets above each other, each sheet being affixed to the two adjacent sheets by zones shifted along said sheet with overlapping portions, in a manner to provide a self-contained unit having, on the one hand, an inner floating surface (Si) of the above-mentioned type and, on the other hand, an outer peripheral surface (Se) the diameter of which corresponds to that of the bore of the bearing body (5),

in inserting said cartridge (1) into the bore of the bearing body (5), then blocking its position against rotation and axial translation with respect to the latter, said method being characterized in that :

each sheet (2) is formed in a manner to comprise an end heel (2a) of circular profile with a radius equal to or slightly smaller than the radius of the bore of the bearing body (5), a small step ((2b) followed by an inner fixing portion (2c) having a circular profile with a radius smaller than the preceding one, and a functional portion (2d) extending the inner portion and having the same profile,

the sheets (2) are maintained by the positioning tooling (11, 12, 13) in such a manner that their end heels (2a) are curved along the radius of the bore of the bearing body (5) and that their inner fixing portion (2c) bears against the end heel of the upper sheet,

said sheets (2) are fixed to each other within the tooling, each sheet being affixed, on the one hand, by its end heel (2a) to the lower sheet and, on the other hand, by its inner fixing portion (2c) to the upper sheet.

2. Method according to claim 1, characterized in that the sheets (2) are affixed by welding or brazing.

3. Method according to any of claims 1 and 2, characterized in that, after its insertion into the bearing body (5), the cartridge (1) is blocked in position with respect thereto by arranging abutment means (7) along the edge of the body, the abutment means being fast with the body and being axially and tangentially applied against conjugate means (3a, 3b) provided along the edge of the cartridge (1).

4. Method according to claim 3, characterized in that the cartridge (1) is formed with indentations (3a, 3b) along its two edges, the blocking of said cartridge being ensured, after its insertion into the bearing body (5), by affixing on each lateral face of said body a crown-shaped disc (7) having inner indentations (7a) engaged with the corresponding indentations of the cartridge.

5. Method according to claim 2, characterized in that the sheets (2) are affixed to each other by welding points provided at the level of their end heels (2a) and their inner fixing portions (2c).

6. Method according to claim 4, characterized in that each sheet (2) is cut in such a manner that its end heel (2a) and its inner fixing portion (2c) are slightly wider than its functional portion (2d), in a manner to provide these heel and inner portions with lateral borders (3), the indentations (3a, 3b) being formed in said lateral borders.

7. Method according to the combined claims 2 and 4, characterized in that the welding points (4a, 4b) are located at the level of the lateral borders (3) of the heels (2a) and inner portion (2c) of each sheet.

## Patentansprüche

1. Verfahren zur Herstellung eines hydrodynamischen Lagers zum Tragen und Führen der Achse einer drehenden Maschine, wobei das Lager vom Typ mit mehreren dünnen, gekrümmten Blättchen (2) in der Bohrung des Lagerkörpers (5) ist, die sich teilweise so überdecken, daß sie eine innere, schwimnende Oberfläche (Si) bilden, die geeignet ist, sich um die Achse zu legen und während deren Drehung die Bildung eines Flüssigkeitsfilms zwischen der Achse und der Oberfläche zu ermöglichen, wobei das Verfahren aus folgenden Schritten besteht :

es wird eine unabhängige Kartusche (1) hergestellt, die zum Bilden der ganzen inneren funktionellen Baugruppe des Lagers dient, wobei diese Kartusche (1) aus dünnen Blättchen (2), wie oben dargestellt, durch Befestigung der Blättchen aufeinander zusammengesetzt wird, wobei jedes Blättchen an den zwei benachbarten Blättchen durch entlang des Blättchens mit den Überdeckungsbereichen versetzte Gebiete befestigt wird, so daß eine unabhängige Baugruppe hergestellt wird, die einerseits eine innere, schwimmende Oberfläche (Si) vom vorher erwähnten Typ und andererseits eine äußere Mantelfläche (Se) besitzt, deren Durchmesser demjenigen der Bohrung des Lagerkörpers (5) entspricht,

die Kartusche (1) wird in die Bohrung des Lagerkörpers (5) eingeführt und dann bezüglich Rotation und axialer Translation zum Körper fixiert, wobei das Verfahren dadurch gekennzeichnet ist, daß:

jedes Blättchen (2) so hergestellt wird, daß es einen Endabsatz (2a) mit kreisförmigem Profil und einem Radius, der gleich oder geringfügig geringer als der Bohrungsradius des Lagerkörpers (5) ist, eine leichte Abknickung (2b), die von einem inneren Befestigungsteilstück (2c) gefolgt wird, das ein kreisförmiges Profil und einen Radius aufweist, der geringer als der vorige ist, und einen funktionellen Teil (2d) besitzt, der das innere Teilstück fortsetzt und dasselbe Profil aufweist,

die Blättchen (2) von der Positionierungsvorrichtung (11, 12, 13) so gehalten werden, daß ihr Endabsatz (2a) sich gemäß dem Bohrungsradius des Lagerkröpers (5) krümmt und ihr inneres Befestigungsteilstück (2c) gegen den Endabsatz des darüberliegenden Blättchens anliegt,

die Blättchen (2) aneinander in der Vorrichtung befestigt werden, wobei jedes Blättchen einerseits durch seinen Endabsatz (2a) auf am darüberliegenden Blättchen und andererseits durch sein inneres Befestigungsteilstück (2c) am darunterliegenden Blättchen befestigt wird.

2. Verfahren nach Anspruch 1, dadurch gekennzeichnet, daß die Blättchen (2) durch Hartlöten oder Schweißen befestigt werden.

3. Verfahren nach einem der Ansprüche 1 oder 2, dadurch gekennzeichnet, daß die Kartusche (1) nach ihrer Einführung in den Lagerkörper (5) zu diesem fixiert wird, wobei am Rand des Körpers Anschlagmittel (7) angebracht werden, die mit dem Körper fest verbunden sind und axial und tangential an ihnen entsprechenden Mittel (3a, 3b), die am Rand der Kartusche (1) vorgesehen sind, anliegen.

4. Verfahren nach Anspruch 3, dadurch gekennzeichnet, daß die Kartusche (1) so hergestellt wird, daß sie entlang ihrer beiden Ränder Rasten (3a, 3b) besitzt, wobei die Fixierung der Kartusche nach ihrem Einführen in den Lagerkörper (5) gewährleistet wird, indem auf jeder Kante des Körpers eine kronenförmige Scheibe (7) mit einer inneren Raste (7a) befestigt wird, die mit der entsprechenden Raste der Kartusche überlappt.

5. Verfahren nach Anspruch 2, dadurch gekennzeichnet, daß die Blättchen (2) aneinander durch Schweißpunkte befestigt werden, die auf Höhe ihrer Endabsätze (2a) und ihrer inneren Bestigungsteilstücke (2c) hergestellt sind.

6. Verfahren nach Anspruch 4, dadurch gekennzeichnet, daß jedes Blättchen (2) so geschnitten ist, daß sein Endabsatz (2a) und sein inneres Befestigungsteilstück (2c) geringfügig breiter als sein funktioneller Teil (2d) sind, so daß der Endabsatz und das innere Teilstück mit seitlichen Randbereichen (3) versehen sind, wobei die Rasten (3a, 3b) in diesen Randbereichen angebracht sind.

7. Verfahren nach der Gesamtheit der Ansprüche 2 bis 4, dadurch gekennzeichnet, daß die Schweißpunkte (4a, 4b) auf Höhe der seitlichen Randbereiche (3) der Absätze (2a) und des inneren Teilstücks (2c) jedes Blättchens hergestellt

Fig 1

Se

2d

2c

4b

Si

2

C

2b

3b

3a

2a

4a

1

Fig.2

2

3c

3b

3

2

2c

3a

2a

Fig. 3

3a

2b

4b

4a

3b

2a

2

2c

2d

Fig. 4

8

5

6

5a

1

7

3

7a

0 095 961

Fig. 5

Fig. 6 a

2

3c

2a  3a  2c  3  3b

Fig. 6b

Fig 6c

12  2  11

13

15

14